(19) Europäisches Patentamt
European Patent Office
Office européen des brevets

(11) Numéro de publication: **0 322 297 B1**

(12) **FASCICULE DE BREVET EUROPEEN**

(45) Date de publication de fascicule du brevet: **25.11.92** (51) Int. Cl.[5]: **C08G 12/38**, C08L 97/02

(21) Numéro de dépôt: **88403236.8**

(22) Date de dépôt: **19.12.88**

(54) **Procédé de préparation de résines aminoplastes à très faible dégagement de formol.**

(30) Priorité: **23.12.87 FR 8717998**

(43) Date de publication de la demande:
**28.06.89 Bulletin 89/26**

(45) Mention de la délivrance du brevet:
**25.11.92 Bulletin 92/48**

(84) Etats contractants désignés:
**AT BE CH DE ES FR GB GR IT LI LU NL SE**

(56) Documents cités:
**EP-A- 0 013 447**
**EP-A- 0 025 245**
**EP-A- 0 107 260**
**DD-A- 219 786**
**DE-A- 2 455 420**
**DE-A- 2 726 512**
**US-A- 2 898 324**

(73) Titulaire: **ELF ATOCHEM S.A.**
**4 & 8, Cours Michelet La Défense 10**
**F-92800 Puteaux(FR)**

(72) Inventeur: **Druet, Bernard**
**4, Avenue du Maréchal Juin**
**F-60750 Choisy au Bac(FR)**
Inventeur: **Hopin, Daniel**
**16, Square Jacques Brel**
**F-60750 Choisy au Bac(FR)**

(74) Mandataire: **Rieux, Michel et al**
**ATOCHEM Département Propriété Industriel-le 4, Cours Michelet - La Défense 10 - Cedex 42**
**F-92091 Paris-La Défense(FR)**

**EP 0 322 297 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne un nouveau procédé de fabrication de résines aminoplastes à très faible dégagement de formol, elle a plus particulièrement pour objet un procédé de fabrication de résines urée-formol "dopées" mélamine à très faible dégagement de formol.

Les résines urée-formol sont des produits connus qui sont utilisées largement dans l'industrie du bois pour la fabrication en particulier de panneaux particules. Elles sont fabriquées de façon connue par condensation d'urée et de formol à pH compris entre 4 et 7 et à une température voisine de l'ébullition : de préférence cette réaction de condensation est réalisée en plusieurs étapes.

Le principal inconvenient des résines urée-formol est de provoquer des émanations élevées de formol libre. On a essayé de réduire le taux de formol libre en mettant en oeuvre divers procédés de fabrication : malheureusement lorsque l'on veut atteindre des taux de formol particulièrement bas, l'expérience montre que cet objectif s'accompagne à la fois d'une diminution de la réactivité et de la stabilité des résines ainsi que d'une dégradation des propriétés mécaniques des panneaux finis. On a aussi proposé pour supprimer le formol libre, d'utiliser des résines dépourvues de formol en particulier des résines à base de solutions d'isocyanates. Malheureusement le problème des isocyanates est susceptible de poser des problèmes de toxicologie.

Un autre moyen de limiter les emissions de formol consiste à ajouter des substances qui fixent ce composé. Parmi ces substances, on peut par exemple citer l'urée, la mélamine ou le phénol ou encore les farines à forte teneur en protéïnes. Malheureusement tous les procédés mettant en oeuvre ces additifs capables de fixer le formol en les ajoutant aux résines urée-formol ont des effets sécondaires gênants, en particulier ils retardent la condensation finale et par conséquent le durcissement des colles.

Le besoin se fait donc sentir de mettre au point des résines urée-formol présentant des dégagements de formol libre réduits, de bonnes stabilités et dont l'utilisation conduit à des panneaux particules finis présentant de bonnes caractéristiques mécaniques.

La présente invention concerne un procédé de fabrication de résine urée-formol contenant de la mélamine caractérisé en ce qu'il comporte trois étapes, en ce que la mélamine est ajoutée, soit lors de la première étape, soit lors de la seconde, soit à la fois lors de la première et de la seconde étape en quantités comprises entre 1 et 10 % par rapport au poids de la résine liquide finie obtenue lors de la deuxième étape et en ce que lors de la première étape, on condense de l'urée, du formol et éventuellement de la mélamine en solution à pH compris entre 4,5 et 6 en quantités telles que le rapport molaire $F/NH_2$ à cette étape soit compris entre 0,9 et 1,5 de préférence entre 0,95 et 1,15 et en ce que, lors de la seconde étape, on rajoute de l'urée et éventuellement de la mélamine, en quantités telles que le rapport $F/NH_2$ de la résine à cette étape soit compris entre 0,5 à 0,9, cette étape étant conduite à pH compris entre 6 et 9 de préférence entre 7 et 8 et à une température comprise entre 70 et 100 °C, la résine obtenue étant éventuellement soumise à une distillation sous vide puis additionnée dans une troisième étape après refroidissement et à température inférieure à 50 °C d'une quantité d'urée telle que le rapport molaire final $F/NH_2$ de la résine soit compris entre 0,30 et 0,50, du borax en quantité au plus égale à 0,5 % en poids par rapport au poids de la résine liquide finie étant éventuellement ajouté.

On a trouvé qu'en opérant dans ces conditions on obtenait des résines urée-formol stables au stockage présentant de bonnes viscosités permettant de bons collages. Ces résines urée-formol permettent de fabriquer des panneaux de particules présentant des taux d'émanation en formol libre réduits alliés à des propriétés mécaniques satisfaisantes.

Le procédé de la présente demande consiste dans une première étape à condenser de l'urée et du formol à pH compris entre 4,5 et 6 en quantités telles que le rapport molaire $F/NH_2$ à cette étape soit compris entre 0,9 et 1,5 et de préférence entre 0,95 à 1,15.

De façon connue il est possible au lieu d'utiliser du formol seul lors de cette étape de condensation de mettre en oeuvre des précondensats d'urée et de formol. Cette étape est conduite de façon connue à la température de reflux soit une température supérieure à 85 °C.

La deuxième étape objet du procédé de l'invention consiste à rajouter de l'urée et de la mélamine en quantités telles que le rapport $F/NH_2$ de la résine à cette étape soit compris entre 0,5 à 0,9. La quantité de mélamine ajoutée étant comprise entre 1 à 10 % en poids par rapport au poids de la résine liquide finie : cette étape est réalisée à pH compris entre 6 à 9 de préférence entre 7 et 8 et à une température comprise entre 70 et 100 °C. Cette étape est ensuite suivie éventuellement d'une phase de concentration de la résine par distillation sous vide : cette phase permet de se débarrasser de l'eau en excès. Dans une troisième étape on ajoute après refroidissement de l'urée, à température inférieure à 40 °C en quantité telle que le rapport molaire final $F/NH_2$ de la résine soit compris entre 0,30 et 0,50.

Selon l'invention il est possible d'ajouter à la fin de la synthèse du borax en quantité au plus égale à

0,5 % en poids par rapport au poids de la résine liquide finie : son addition améliore la stabilité et la réactivité de la résine ainsi que le gonflement des panneaux.

Une deuxième variante du procédé selon l'invention consiste tout en opérant dans les conditions énoncées précédemment à introduire la mélamine lors de la première étape de condensation.

Une troisième variante du procédé selon l'invention consiste à introduitre de la mélamine à la fois lors de la première étape de condensation et lors de la deuxième étape de condensation en respectant les conditions de pH et de rapport $F/NH_2$ précédemment énoncées.

Les exemples suivants illustrent la présente invention. Les quantités sont exprimées en parties en poids.

Exemple 1

Dans un réacteur muni d'un réfrigérant, d'un agitateur et d'un dispositif de chauffage, on introduit 13.355 parties d'une solution de formol à 50 %, 6.360 parties d'urée en perles : le mélange réactionnel est chauffé à une température comprise entre 85 et 98°C pendant environ 1H 30 minutes et à pH voisin de 5 par addition d'acide formique. En fin de condensation qui est déterminée par la mesure de la viscosité qui à 40°C doit être comprise entre 275 et 300mPa.s, on amène le pH à une valeur voisine de 7 par addition de soude caustique.

On ajoute ensuite au milieu réactionnel 3.825 parties d'urée et 825 parties de mélamine : la réaction est conduite à une température comprise entre 75 - 80°C et à pH voisin de 7.

A la fin de cette étape le rapport molaire $F/NH_2$ est de 0,62.

Le mélange réactionnel est ensuite concentré sous vide à 50°C, ce qui permet de distiller 545 parties d'eau. On ajoute ensuite à 30°C 3.430 parties d'urée. La résine finale obtenue possède un rapport molaire $F/NH_2$ de 0,47 : son pH est de 8,5. Les autres caractéristiques sont les suivantes :

| | |
|---|---|
| - Viscosité (20°C) | 750 m Pa.s |
| - Extrait sec % | 65 |
| - Diluabilité à l'eau (20°C) | 0,5/1 |
| - Temps de gel à 100°C (avec 5% d'une solution à 15% de chlorure d'ammonium) | 5 minutes |
| - Stabilité à 20°C (temps au bout duquel la résine a atteint une viscosité de 3 Pa.s) | 60 jours |

La résine obtenue est utilisée pour la fabrication de panneaux particules. Dans ce but la résine est durcie avec 1,5 % de chlorure d'ammonium par rapport à la quantité de résine sèche. Les panneaux sont pressés à 180°C pendant 3 minutes : ils présentent les caractéristiques suivantes :

| | |
|---|---|
| - Epaisseur (mm) | 20 |
| - Masse volumique (kg/m3) | 615 |
| - Gonflement 24 heures dans l'eau à 20°C % | |
| . Selon Norme NF | 17,5 |
| . Selon Norme DIN | 18,4 |
| - Traction perpendiculaire (daN/cm2) | 4,6 |
| - Formol perforateur ( mg/100g panneau sec) | 4,0 |

Les caractéristiques des panneaux ont été réalisées selon les normes suivantes :

| | |
|---|---|
| - Epaisseur<br>- Masse volumique<br>- Traction perpendiculaire | NFB 51200<br>NFB 51222<br>NFB 51250 |
| - Gonflement | NFB 51252<br>DIN 68763 |
| - Teneur en formol | CEN-EN-120 |

Exemple 2

L'exemple 1 est répété mais en mettant en oeuvre 6 % de mélamine par rapport au poids de la résine liquide. La résine obtenue présente les caractéristiques suivantes :

| | |
|---|---|
| -Viscosité (20 ° C) | 820 m Pa.s |
| - Extrait sec % | 65,3 |
| - Diluabilité à l'eau (20 ° C) | 0,7/1 |
| - Temps de gel 100 ° C (avec 5% de solution $NH_4$cl à 15%) | 7 minutes |
| - Evolution de la stabilité | 65 jours : (Temps au bout duquel la stabilité atteint une stabilité de 3 Pa.s) |

Les panneaux fabriqués avec cette résine présentent les caractéristiques suivantes :

| | |
|---|---|
| - Epaisseur (mm) | 20 |
| - Masse volumique (kg/m3) | 611 |
| - Gonflement (eau à 20 ° C 24 heures %) | |
| . Selon Norme NF | 15,9 |
| . Selon Norme DIN | 16,6 |
| - Traction perpendiculaire (da N/CM2) | 4,5 |
| - Formol perforateur | 4 |

Exemple 3

L'exemple 2 est répété mais sans addition de mélamine et par addition de 0,1 % de borax en fin de synthèse. La résine obtenue présente les caractéristiques suivantes :

| | |
|---|---|
| - Densité (20 ° C) | 1,277 |
| -Viscosité (20 ° C) | 590 m Pa.s |
| - Extrait sec % | 65,1 |
| - Diluabilité à l'eau | 1,5/1 |
| - pH | 8,3 |
| - Temps de gel à 100 ° C (avec 5 % solution $NH_4$ cl) | 1 minute 5 secondes |

Les panneaux fabriqués avec cette résine présentent les caractéristiques suivantes :

| | |
|---|---|
| - Epaisseur (mm) | 20,5 |
| - Masse volumique (kg/m3) | 616 |
| - Gonflement % | |
| . NF | 23,3 |
| . DIN | 24,5 |
| - Traction perpendiculaire (daN/Cm2) | 2,6 |
| - Formol perforateur | 3,5 |

Exemple 4

L'exemple 1 est répété mais en mettant en oeuvre les réactifs suivants :

- dans la première étape :
  1840 parties de formol à 50 %
  800 parties d'urée
  le rapport molaire

$$\frac{F}{NH_2}$$

est de 1,15
- dans la deuxième étape :
  444 parties d'urée
  240 parties de mélamine
  le rapport molaire

$$\frac{F}{NH_2}$$

est de 0,65
- dans la troisième étape :
  676 parties d'urée
  le rapport molaire

$$\frac{F}{NH_2}$$

de la résine obtenue est de 0,44

La résine obtenue présente les caractéristiques suivantes :

| | |
|---|---|
| -Viscosité (20 ° C) | 930 m Pa.s |
| - Extrait sec | 65 % |
| - pH | 7,5 |
| - Diluabilité à l'eau | 0,6/1 |
| - Stabilité à 20 ° C | 41 jours (pour viscosité 20 ° C : 3 Pa.s) |

Des panneaux fabriqués avec cette résine présentent les caractéristiques suivantes :

| | |
|---|---|
| - Epaisseur (mm) | 20,3 |
| - Masse volumique (kg/m3) | 605 |
| - Traction perpendiculaire | 4,3 |
| - Gonflement % | |
| . NF | 19,3 |
| . DIN | 20,6 |
| - Formol perforateur | 3,5 |

<u>Exemple 5</u>

La résine est fabriquée en mettant en oeuvre les reactifs suivants :

| | | |
|---|---|---|
| - 1er étape | Formol à 46,62 %<br>Urée | 2529 parties<br>1123 parties |
| | ($F/NH_2$ = 1,05 donc ) | |
| - 2ème étape | Urée<br>Mélamine | 522 parties<br>360 parties |
| - 3ème étape | Urée | 1466 parties |

Le rapport

$$\frac{F}{NH_2}$$

de la résine obtenue est de 0.35. La résine présente les caractéristiques suivantes :

| | |
|---|---|
| - Viscosité 20° C<br>- Extrait sec %<br>- pH<br>- Diluabilité à l'eau | 520 m Pa.s<br>66,0<br>8,3<br>0,5/1 |

La même résine fabriquée en ajoutant 0,1 % de borax présente les caractéristiques suivantes :

| | |
|---|---|
| - Viscosité à 20° C<br>- Extrait sec %<br>- pH<br>- Diluabilité à l'eau | 530 m Pa.s<br>66,1<br>9,5<br>0,5/1 |
| - Stabilité = 20° C = 105 jours (temps au bout duquel la viscosité atteint 3 Pa.s). | |

Les panneaux fabriqués présentent les caractéristiques suivants :

| | |
|---|---|
| - Epaisseur (mm) | 20,4 |
| - Gonflement 24 h (%) | |
| . NF | 35,4 |
| . DIN | 35,9 |
| - Traction perpendiculaire | 0,8 |
| - Teneur en formol | 2,5 |

Exemple 6

L'exemple 1 est répété en mettant en oeuvre dans la première étape:

| | |
|---|---|
| - Formol 50 % | 1840 parties |
| - Urée | 705 parties |
| - Mélamine | 240 parties |

Cette étape est conduite à pH acide égal à 6. Le rapport molaire

$$\frac{F}{NH_2}$$

est de 1,05.

On ajoute ensuite lorsque la viscosité (à 40 ° C) du milieu réactionnel est de 550 m Pa.s, 964 parties d'urée, le rapport molaire

$$\frac{F}{NH_2}$$

est de 0,5, cette étape est réalisée à pH égal à 6,5. On ajoute ensuite en fin de réaction 251 parties d'urée. La résine présente les caractéristiques suivantes :

| | |
|---|---|
| - Viscosité à 20 ° C | 315 m Pa.s |
| - Extrait sec | 64,6 % |
| - pH | 8,2 |
| - Diluabilité à l'eau | 0,75/1 |
| - Temps de gel à 100 ° C avec 5% solution $NH_4$ cl | 15 minutes |
| - Stabilité à 20 ° C | 170 jours |

Les panneaux fabriquées avec cette résine présente les caractéristiques suivantes :

| | |
|---|---|
| - Epaisseur (mm) | 20,3 |
| - Masse volumique (kg/m3) | 619 |
| - Gonflement % | |
| . NF | 12,8 |
| . DIN | 13,7 |
| - Traction perpendiculaire (daN.cm2) | 4,9 |
| - Formol perforateur | 3,5 |

Exemple 7

L'exemple 1 est répété en mettant en oeuvre les réactifs suivants :

- 1689 parties d'un précondensat urée-formol contenant 57 % de formol et 23,6 % d'urée,
- 582 parties d'eau
- 529 parties d'urée

Le rapport molaire

$$\frac{F}{NH_2}$$

à cette étape est de 1,05.

On ajoute ensuite après cette étape de condensation acide

- 464 parties d'urée
- 240 parties de mélamine

Le rapport molaire

$$\frac{F}{NH_2}$$

à cette étape est de 0,62.

Dans une troisième étape on rajoute 4 parties de borax, 496 parties d'urée. La résine finale obtenue présente les caractéristiques suivantes :

| | |
|---|---|
| - $F/NH_2$ = 0,47 | |
| - Viscosité à 20 ° C | 0,74 Pa.s |
| - Extrait sec | 65,3 % |
| - pH | 8,3 |
| - Temps de gel à 100 ° C | 13 minutes |
| - Stabilité à 20 ° C | 70 jours |

Caractéristiques des panneaux :

| | |
|---|---|
| - Epaisseur (mm) | 20,2 |
| - Masse volumique (kg.m2) | 610 |
| - Gonflement 24 h-eau 20 ° C (%) | |
| NF | 18,8 |
| DIN | 19,1 |
| - Traction perpendiculaire (daN/cm2) | 3,0 |
| - Formol perforateur (mg/100g) | 4,5 |

Exemple 8

L'exemple 1 est répété en mettant en oeuvre les réactifs suivants :
Dans la première étape :

- 2677 parties d'une solution de formol à 47,3 %
- 1207 parties d'urée

le rapport molaire $F/NH_2$ à cette étape est de 1,05.
Dans la deuxième étape on met en oeuvre :

- 451 parties d'urée
- 540 parties de mélamine

Le rapport molaire $F/NH_2$ à cette étape est 0,62.
On ajoute en fin de condensation 6 parties de borax et 1125 parties d'urée.
La résine obtenue présente les caractéristiques suivantes :

| | |
|---|---|
| - $F/NH_2$ = 0,40 | |
| - Viscosité à 20 ° C | 1,09 Pa.s |
| - Extrait sec (%) | 65 |
| - Densité (20 ° C) | 1,280 |
| - pH | 9,3 |

Exemple 9

On procède comme dans l'exemple 2 mais avec addition de 0,25 % de borax.

| | |
|---|---|
| - Viscosité 20 ° C | 0,60 Pa.s |
| - Extrait sec (%) | 64,3 |
| - Diluabilité à l'eau 20 ° C | 0,7/1 |
| - Temps de gel à 100 ° C (avec 5% de solution $NH_4$ CL à 15 %) | 4 minutes |

Avec un taux d'encollage augmenté de 18 %, les caractéristiques des panneaux sont les suivantes :

| | |
|---|---|
| - Epaisseur (mm) | 20 |
| - Masse volumique (kg/m3) | 645 |
| - Gonflement (24 h -eau 20 ° C %) | |
| NF | 9,5 |
| DIN | 12,2 |
| - Traction perpendiculaire (daN/cm2) | 5,5 |
| - Formol perforateur ( mg/100 g panneau sec | 4 |

Exemple 10

On procède comme dans l'exemple 5 mais avec addition de 0,25 % de borax.

| | |
|---|---|
| - Viscosité 20 ° C | 0,66 Pa.s |
| - Extrait sec (%) | 65,5 |
| - pH | 9,2 |
| - Diluabilité à l'eau 20 ° C | 0,5/1 |

Avec un taux d'encollage augmenté de 18 %, les caractéristiques des panneaux sont les suivantes :

| | |
|---|---|
| - Epaisseur (mm) | 20,3 |
| - Masse volumique (kg/m3 | 630 |
| - Gonflement (24 h -eau 20 ° C %) | |
| NF | 28,3 |
| DIN | 30,0 |
| - Traction perpendiculaire (daN/cm2) | 1,8 |
| - Formol perforateur ( mg/100 g) | 2,5 |

Exemple 11

On procède comme dans l'exemple 8 mais avec addition de 0,25 % de borax.

| | |
|---|---|
| - Viscosité 20 ° C | 0,88 Pa.s |
| - Extrait sec (%) | 64,6 % |
| - Densité 20 ° C | 1,280 |
| - pH | 9,2 |
| - Diluabilité à l'eau 20 ° C | 0,5/1 |

Avec un taux d'encollage augmenté de 18 %, les caractéristiques des panneaux sont les suivantes :

| | |
|---|---|
| - Epaisseur (mm) | 20,0 |
| - Masse volumique (kg/m3) | 645 |
| - Gonflement (24 H -eau 20 ° C (%) | |
| NF | 11,4 |
| DIN | 14,2 |
| - Traction perpendiculaire (daN/cm2) | 4,8 |
| - Formol perforateur (mg/100 g) | 3,5 |

**Revendications**

**1.** Procédé de fabrication de résines urée-formol contenant de la mélamine caractérisé en ce qu'il

comporte trois étapes, en ce que la mélamine est ajoutée soit lors de la première étape, soit lors de la seconde, soit à la fois lors de la première et de la seconde étape en quantités comprises entre 1 et 10 % par rapport au poids de la résine liquide finie obtenue lors de la deuxième étape et en ce que lors de la première étape, on condense de l'urée, du formol et éventuellement de la mélamine, en solution à pH compris entre 4,5 et 6 en quantités telles que le rapport molaire $F/NH_2$ à cette étape soit compris entre 0,9 et 1,5 de préférence entre 0,95 et 1,15 et en ce que, lors de la seconde étape, on rajoute de l'urée et éventuellement de la mélamine en quantités telles que le rapport $F/NH_2$ de la résine à cette étape soit compris entre 0,5 et 0,9, cette étape étant conduite à pH compris entre 6 et 9 et de préférence entre 7 et 8 et à une température comprise entre 70 et 100 ° C, la résine obtenue étant éventuellement soumise à une distillation sous vide puis additionnée dans une troisième étape après refroidissement et à température inférieure à 50 ° C d'une quantité d'urée telle que le rapport molaire final $F/NH_2$ de la résine soit compris entre 0,30 et 0,50, du borax en quantité au plus égale à 0,5 % en poids par rapport au poids de la résine liquide finie étant éventuellement ajouté.

## Claims

1. Process for the production of urea-formaldehyde resins containing melamine characterized in that it comprises three stages, in that the melamine is added either at the first stage, or at the second stage, or at both first and second stages in quantities between 1 and 10 % relative to the weight of the finished liquid resin obtained at the second stage and in that at the first stage urea, formaldehyde and optionally melamine are condensed in solution at pH between 4.5 and 6 in quantities such that the $F/NH_2$ molar ratio at this stage is between 0.9 and 1.5, preferably between 0.95 and 1.15 and in that, at the second stage, more urea and optionally melamine are added in quantities such that the resin's $F/NH_2$ ratio at this stage is between 0.5 and 0.9, this stage being conducted at pH between 6 and 9 and preferably between 7 and 8 and at a temperature between 70 and 100 ° C, the resulting resin being optionally subjected to vacuum distillation, then in a third stage, after cooling, and at a temperature below 50 ° C, having a quantity of urea added such that the resin's final $F/NH_2$ molar ratio is between 0.30 and 0.50; borax in a quantity up to a maximum of 0.5 % by weight relative to the weight of finished liquid resin being optionally added.

## Patentansprüche

1. Verfahren zur Herstellung von Melamin enthaltenden Harnstoff-Formol-Harzen, dadurch gekennzeichnet, daß es drei Schritte umfaßt, daß das Melamin entweder im ersten Schritt oder im zweiten Schritt oder zugleich im ersten und zweiten Schritt in Mengen zwischen 1 und 10%, bezogen auf das Gewicht des im zweiten Schritt erhaltenen fertigen flüssigen Harzes, zugegeben wird, daß man im ersten Schritt Harnstoff, Formol und gegebenenfalls Melamin in Lösung bei einem pH-Wert zwischen 4,5 und 6 in solchen Mengen kondensiert, daß das Molverhältnis $F/NH_2$ in diesem Schritt zwischen 0,9 und 1,5, vorzugsweise zwischen 0,95 und 1,15, beträgt und daß im zweiten Schritt Harnstoff und gegebenenfalls Melamin in solchen Mengen zugegeben werden, daß das Verhältnis $F/NH_2$ des Hartes in diesem Schritt zwischen 0,5 und 0,9 beträgt, wobei dieser Schritt bei einem pH-Wert zwischen 6 und 9, vorzugsweise zwischen 7 und 8, und bei einer Temperatur zwischen 70 ° und 100 ° C ausgeführt wird, das erhaltene Hart gegebenenfalls einer Vakuumdestillation unterzogen und dann in einem dritten Schritt nach Abkühlung und bei einer Temperatur unter 50 ° C eine solche Menge an Harnstoff zugesetzt wird, daß das endgültige Molverhältnis $F/NH_2$ des Harzes zwischen 0,30 und 0,50 beträgt, wobei gegebenenfalls Borax in einer Menge von höchstens 0,5 Gew.-%, bezogen auf das Gewicht des fertigen flüssigen Harzes, zugegeben wird.